# FASCICULE DE BREVET EUROPEEN

(11) **EP 2 502 806 B1**
(45) Date de publication et mention de la délivrance du brevet: **27.11.2013**
(21) Numéro de dépôt: 12160909.3
(22) Date de dépôt: 23.03.2012
(51) Int. Cl.: B62D 27/06, F16B 5/06

(54) **Ensemble d'équipement de véhicule automobile et un procédé de montage associé**
Zusammenbau einer Fahrzeugbaugruppe und entsprechendes Verfahren
Assembly of vehicle components and associated assembly method

(30) Priorité: 23.03.2011 FR 1152395
(43) Date de publication de la demande: 26.09.2012
(73) Titulaire: Faurecia Bloc Avant, 92000 Nanterre (FR)
(72) Inventeur: Bonnot, Denis, 25400 TAILLECOURT (FR)
(74) Mandataire: Blot, Philippe Robert Emile

(56) Documents cités:
- EP-A1- 1 251 285
- CH-A- 402 626
- DE-A1- 3 806 091

## Description

La présente invention concerne un ensemble d'équipement de véhicule automobile comportant une première pièce et une deuxième pièce, chaque pièce comprenant au moins une languette formée en saillie sur une face de la pièce.

Le document EP 1 251 285 A1 décrit un ensemble selon le préambule de la revendication 1.

L'invention concerne également le procédé de montage d'un tel ensemble.

II est connu des dispositifs de fixation dans lesquels un clip ou une agrafe est utilisé afin de rendre solidaires les languettes appartenant respectivement à la première et à la deuxième pièce.

Toutefois, de tels éléments présentent l'inconvénient de posséder une tenue à l'arrachement médiocre. De plus, le clip ou l'agrafe peuvent être mis en place alors que les première et deuxième pièces ne sont pas correctement positionnées l'une par rapport à l'autre.

II est également connu de joindre les languettes au cours d'une étape de soudure. Toutefois, cette technologie est couteuse et nécessite un lourd investissement. De plus, le problème de positionnement n'est pas résolu par cette solution. La soudure présente également l'inconvénient d'empêcher le démontage des pièces sans endommager ces dernières.

L'invention a pour but de palier ces inconvénients en proposant un ensemble d'équipement comprenant deux pièces fixées entre elles de manière peu couteuse, simple à mettre à oeuvre, facilement démontable et assurant un bon positionnement des pièces.

A cet effet, l'invention a pour objet un ensemble de type susmentionné comprenant :
- un dispositif de maintien muni d'un orifice communiquant avec un logement ménagé à l'intérieur du dispositif de maintien, lesdites languettes étant destinées à s'insérer dans le logement du dispositif de maintien, et
- un organe de blocage propre à écarter les languettes pour les expanser dans ledit logement, cet organe de blocage étant introduit à travers l'orifice du dispositif de maintien pour s'insérer entre les languettes.

Le dispositif selon l'invention peut comporter une ou plusieurs des caractéristiques suivantes :
- les languettes peuvent être venues de moulage avec les pièces les supportant ;
- chaque languette peut s'étendre à une extrémité de la pièce et perpendiculairement par rapport à la surface la supportant ;
- le dispositif de maintien peut former un capuchon délimitant un logement fermé, le capuchon étant propre à s'opposer à l'expansion des languettes lors de l'introduction de l'organe de blocage entre les languettes ;
- le capuchon et le logement ménagé à l'intérieur du capuchon peuvent présenter la forme d'un cône tronqué, et les languettes peuvent posséder chacune la forme d'un demi-cône de manière à venir se plaquer contre les parois du logement lors de l'introduction de l'organe de blocage ;
- le capuchon peut posséder une face supérieure délimitant l'orifice communiquant avec le logement, et au moins trois autres faces latérales s'étendant à partir de la face supérieure, deux des faces disposées en vis-à-vis possédant des surfaces inclinées contre lesquelles viennent se plaquer les languettes lors de l'introduction de l'organe de blocage ;
- l'organe de blocage peut être une vis ;
- les première et deuxième pièces peuvent appartenir à un équipement de véhicule automobile, par exemple à un pare-chocs ;
- l'ensemble peut comprendre en outre une troisième pièce à fixer sur les première et deuxième pièces, la troisième pièce comportant un orifice traversant, les languettes des première et deuxième pièces étant destinées à s'étendre à travers l'orifice, le dispositif de maintien s'appuyant sur la troisième pièce pour enserrer la troisième pièce entre au moins une de la première pièce et de la deuxième pièce.

L'invention concerne également un procédé de montage d'un ensemble selon l'invention, caractérisé en qu'il comprend les étapes suivantes :
- de rapprochement des première et deuxième pièces de manière à ce que les languettes s'étendent en vis-à-vis, de manière à ménager entre elles un espace intermédiaire ;
- d'engagement du dispositif de maintien sur les languettes de manière à ce que les extrémités libres des languettes viennent en appui contre une face supérieure du dispositif de maintien ;
- d'engagement en force de l'organe de blocage dans l'orifice du dispositif de maintien communiquant avec le logement, pour que l'organe de blocage s'étende dans l'espace séparant les languettes en écartant les languettes.

Selon un mode de réalisation particulier, le procédé de montage peut comprendre, avant l'engagement du dispositif de maintien sur les languettes, l'engagement des languettes dans un orifice traversant ménagé dans une troisième pièce destinée à être fixée sur la première pièce et sur la deuxième pièce.

L'invention sera mieux comprise à la lecture de la description qui va suivre, donnée uniquement à titre d'exemple et faite en se référant aux dessins annexés, sur lesquels :
- la Figure 1 est une vue schématique en coupe d'un ensemble d'équipement selon l'invention, avant assemblage, ledit ensemble comprenant deux pièces à assembler ;
- la Figure 2 est une vue schématique en coupe de l'ensemble d'équipement représenté à la Figure 1, après assemblage ;
- la Figure 3 est une vue analogue à la Figure 2, l'ensemble d'équipement comprenant une troisième pièce à assembler ;
- la Figure 4 est une vue schématique en perspective d'un dispositif de maintien, selon un premier mode de réalisation, appartenant à l'ensemble d'équipement ; et
- la Figure 5 est une vue schématique en perspective d'un dispositif de maintien, selon un second mode de réalisation.

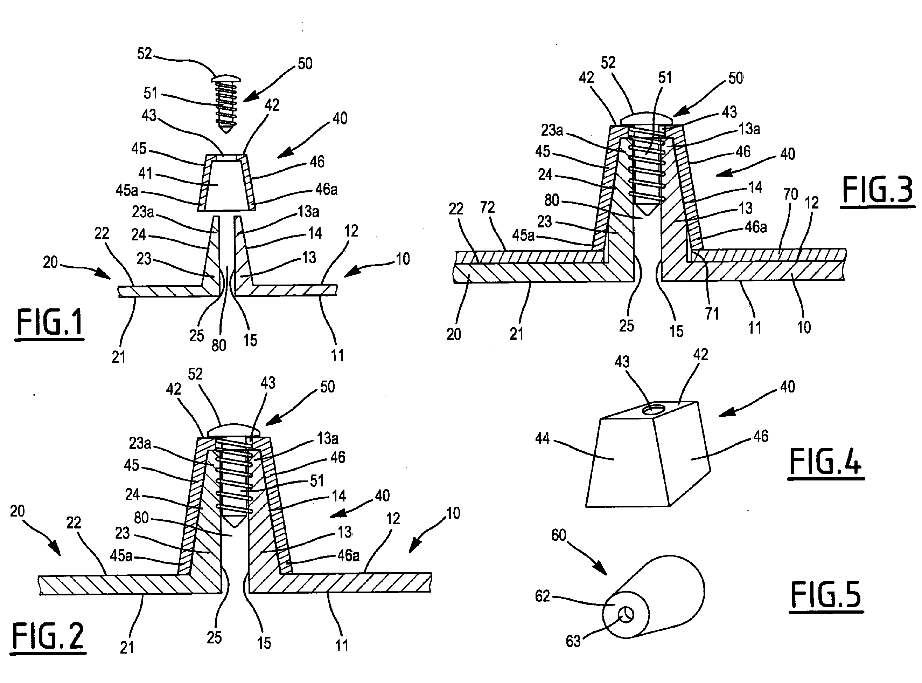

Les Figures 1 et 2 représentent un ensemble d'équipement selon l'invention comprenant une première pièce 10 et une deuxième pièce 20 à assembler, à l'aide d'un dispositif de maintien et d'un organe de blocage qui seront détaillés ultérieurement.

La première pièce 10 est formée par une plaque sensiblement plane, comportant une face 11 présentant un aspect esthétique et destinée à être visible, et une face de fixation 12, parallèle et opposée à la face 11.

De même, la deuxième pièce 20 est formée par une plaque sensiblement plane, comportant une face 21 présentant un aspect esthétique et destinée à être visible, et une face de fixation 22, parallèle et opposée à la face 21.

Chaque pièce 10 ou 20 comporte une languette, respectivement 13, 23, s'étendant à l'extrémité de la pièce la supportant.

Chaque languette 13 ou 23 s'étend en saillie et perpendiculairement, comme cela est représenté aux Figures 1 à 3, ou de manière inclinée par rapport aux faces de fixation, respectivement 12, 22.

Les languettes, respectivement 13 ou 23, sont venues de moulage avec, respectivement, la première pièce 10 ou la deuxième pièce 20. Elles présentent l'avantage d'être déformables élastiquement.

Les languettes 13, 23 sont sensiblement de même hauteur et présentent une longueur suffisante pour l'insertion du dispositif de maintien comme nous le verrons par la suite. A cet effet, une longueur égale ou supérieure à 30mm est préconisée.

Les languettes 13 et 23 sont sensiblement identiques et comportent une face intérieure, 14 ou 24, disposée à proximité de la face de fixation, 12 ou 22, et une face extérieure, 15 ou 25.

L'épaisseur de chaque languette 13 ou 23 est plus importante au voisinage de la pièce la supportant qu'à son extrémité libre, respectivement 13a et 23a. Ainsi, une diminution régulière de matière est constatée le long de la languette 13 ou 23 de manière à ce que sa face intérieure, 14 ou 24, forme une surface inclinée.

Ainsi, chaque face extérieure, 15 ou 25 forme un angle droit avec les faces 11 ou 21 présentant un aspect esthétique ainsi qu'avec les faces de fixation 12 ou 22, tandis que chaque face intérieure, 14 ou 24 présente un angle compris entre 15° et 20° avec les faces de fixation 12 ou 22.

Le dispositif de maintien est destiné à être engagé sur les extrémités libres 13a, 23a de chaque languette 13 et 23 de manière à maintenir en place les pièces 10 et 20 et comprend à cet effet une ouverture d'insertion des languettes.

Dans les exemples de réalisations représentés aux Figures 1 à 5, le dispositif de maintien forme un capuchon référencé 40 ou 60 selon le mode de réalisation.

Selon un premier mode de réalisation représenté aux Figures 1 à 4, le capuchon 40 possède un logement 41 intérieur permettant l'insertion des languettes 13 et 23 en vue de l'assemblage des première et deuxième pièces 10 et 20.

Le capuchon 40 possède une face supérieure 42 délimitant un orifice 43, afin de permettre l'introduction d'un organe de blocage formé, dans cet exemple, par une vis 50. L'orifice 43 communique avec le logement 41. L'ouverture 43 est placée à l'opposé de l'ouverture d'insertion des languettes.

Classiquement la vis 50 comporte une tige filetée 51 et une tête de fixation 52. La vis est destinée à être introduite en force entre les languettes 13 et 23 pour les écarter l'une de l'autre.

Le capuchon 40 possède quatre faces latérales, s'étendant à partir de la face supérieure 42. Deux premières faces, une seule est visible à la figure 4 et référencée 44, s'étendent parallèlement et deux autres faces, 45 et 46, sont disposées en vis-à-vis. Ces faces 45 et 46 possèdent des surfaces intérieures inclinées de manière à épouser en position d'assemblage les faces intérieures 14 et 24 des languettes. Ces faces 45 et 46 sont suffisamment espacées de façon à permettre l'introduction des languettes 13 et 23, au cours de l'étape d'assemblage, l'espace ménagé entre lesdites faces 45 et 46 constituant le logement 41. L'espace entre les faces 45 et 46 est par ailleurs adapté pour que les languettes 13, 23 se plaquent contre les faces respectives lorsque la vis est introduite dans le logement 41.

Dans cet exemple de réalisation, les faces sont pleines.

Le capuchon 40 possède une longueur supérieure à la longueur des languettes 13 et 23.

Comme représenté à la Figure 5, en variante, le capuchon peut prendre la forme d'un cône tronqué 60 dont l'extrémité supérieure 62 possède un orifice 63 permettant l'introduction de la vis 50 et communiquant avec un logement intérieur.

Le cône 60 est défini de manière à ce que les parois délimitant le logement intérieur de ce dernier épousent les faces intérieures des languettes, respectivement 14 et 24, en position d'assemblage, ces dernières pouvant notamment prendre la forme de demi-cônes.

Ainsi, au cours de l'assemblage des pièces 10 et 11, les étapes suivantes sont observées.

Au cours d'une première étape, les pièces 10 et 11 sont rapprochées de manière à ce que leur face esthétique, respectivement 11, 21, et leur face de fixation, respectivement 12, 22, s'étendent dans un même plan. Les languettes 13, 23 s'étendent sensiblement parallèlement. Les faces extérieures 15 et 25 appartenant respectivement aux pièces 10 et 20 sont disposées en vis-à-vis de manière à ménager entre elles un espace 80 intermédiaire, par exemple, compris entre 5mm et 10mm.

Au cours d'une seconde étape le capuchon 40 est engagé sur les languettes 13 et 23 de manière à ce que les extrémités libres 13a, 23a de chaque languette viennent en appui contre la face supérieure 42. Les languettes 13, 23 entrent dans le logement 41 par l'ouverture d'insertion.

Puis, au cours d'une troisième étape, la vis de fixation 50 est engagée dans l'orifice 43 réalisée dans la face supérieure 42 et est vissée en force de manière à ce que sa partie filetée 51 s'étende dans l'espace 80 délimité par les faces extérieures 15 et 25 des languettes 13 et 23, et ceci jusqu'à ce que sa tête 52 bute contre la paroi extérieure de la face supérieure 42.

Suite à cette troisième étape, la tige filetée 51 exerce une pression latérale assurant le plaquage des languettes 13 et 23 contre les parois 45 et 46 du capuchon 40. La tête 52 assure le plaquage des extrémités 13a et 23a des languettes contre la face supérieure 42 ainsi que le plaquage des extrémités libres 45a et 46a des parois 45 et 46 opposées à la face supérieure 42, contre les faces de fixation 12 et 22, de manière à assurer l'assemblage des pièces 10 et 20.

En variante, comme représenté à la Figure 3, le dispositif de fixation selon l'invention peut également être adapté pour permettre l'assemblage de trois pièces, les première et deuxième pièces 10 et 20 décrites ci-dessus et une troisième pièce 70 possédant un orifice 71 traversant pour le passage des languettes 13 et 23, appartenant aux première et deuxième pièces 10 et 20.

Dans cette variante de réalisation, afin de permettre un bon positionnement de la pièce, l'épaisseur des languettes peut être constante dans la zone située au voisinage de l'orifice 71.

Lorsque l'objectif est d'assembler les pièces 10, 20 et 70, au cours d'une étape intermédiaire se déroulant entre la première et la seconde étape définies ci-dessus, les languettes 13 et 23 sont engagées dans l'orifice 71 de la troisième pièce 70. Suite à cette étape, la troisième pièce s'étend parallèlement aux deux autres pièces 10 et 20.

Comme représenté à la Figure 3, une fois l'assemblage réalisé, les extrémités 45a et 46a des parois 45 et 46 prennent appui contre la face supérieure 72 de la troisième pièce 70 opposée aux faces de fixation 12 et 22, des première et deuxième pièces 10 et 20. La troisième pièce 70 est ainsi enserrée entre le capuchon 40 et les première et deuxième pièces 10 et 20.

Au cours de la troisième étape, la vis 50 est vissée en force dans l'espace 80 grâce à un couple de serrage défini assurant un assemblage satisfaisant des pièces 10, 20 et éventuellement 70. II est à noter que la forme conique du capuchon, associé à des languettes en forme de demi-cône, permet de limiter les risques d'un mauvais assemblage lors de l'étape de vissage.

L'utilisation du capuchon prenant la forme du cône tronqué 60 représenté à la Figure 5 afin de permettre l'assemblage des pièces 10 et 11 ou des pièces 10, 11 et 70 ne sera décrite ici car les étapes d'assemblage sont les mêmes que celles décrites précédemment.

Comme décrit précédemment, le dispositif de maintien forme un capuchon. De préférence, ce dernier délimite un logement fermé. Ainsi le capuchon est propre à s'opposer à l'expansion des languettes 13, 23 lors de l'introduction de l'organe de blocage entre les languettes. Ainsi, le capuchon ne peut s'ouvrir lorsqu'un couple de serrage est appliqué sur la vis au cours de l'étape d'assemblage.

Avantageusement, les première et deuxième pièces 10 et 20 peuvent appartenir à un équipement de véhicule automobile comprenant deux pièces distinctes, tel qu'un pare-chocs de véhicule automobile, la pièce 70 pouvant par exemple constituer une pièce de renfort.

De préférence, les pièces 10, 20 et 70 sont réalisées en matière plastique. Un tel équipement permet l'assemblage de pièces réalisées en matériau différent. Ainsi ces pièces peuvent être réalisées en ABS, en Polypropylène (PP), ou en ABS revêtu d'un chromage.

De préférence, la vis 50 est réalisée dans un matériau relativement tendre tel qu'une matière plastique.

Les capuchons 40 ou 60 peuvent être réalisés en matière plastique ou en métal.

Bien évidemment, plusieurs dispositifs de fixation tels que décrits ci-dessus peuvent être utilisés pour assembler les première et deuxième pièces 10 et 20, ainsi que la troisième pièce 70. A cet effet, les première et deuxième pièces 10 et 20 sont pourvues de plusieurs languettes, telles que les languettes 13 et 23 décrites précédemment.

Avantageusement, le positionnement des pièces 10 et 20, avant fixation, est facilité puisque ce positionnement est correctement défini dès que les languettes 13 et 23 sont introduites dans le dispositif de maintien. II en est de même lors du positionnement de la pièce 70 dont le positionnement est correctement défini dès que les languettes 13 et 23 sont introduites dans l'orifice 71.

Un tel dispositif de fixation permet un assemblage rapide sur des chaînes de montage automatisées. II permet également un démontage rapide en dévissant la vis puis en ôtant le dispositif de maintien, sans abimer les pièces assemblées, ce qui peut présenter un avantage en après-vente ou pour un démontage en vue d'une opération de recyclage par exemple.

## Revendications

1. Ensemble d'équipement de véhicule automobile comportant une première pièce (10) et une deuxième pièce (20), chaque pièce (10, 20) comprenant au moins une languette (13, 23) formée en saillie sur une face (12, 22) de la pièce et comprenant,
un dispositif de maintien (40, 60) muni d'un orifice (43, 63) communiquant avec un logement (41) ménagé à l'intérieur du dispositif de maintien, lesdites languettes (13, 23) étant destinées à s'insérer dans le logement (41) du dispositif de maintien,
**caractérisé en ce qu'**il comprend, en outre un organe de blocage (50) propre à écarter les languettes (13, 23) pour les expanser dans ledit logement (41), cet organe de blocage étant introduit à travers l'orifice (43, 63) du dispositif de maintien pour s'insérer entre les languettes (13, 23).

2. Ensemble selon la revendication 1, **caractérisé en ce que** les languettes sont venues de moulage avec les pièces (10, 20) les supportant.

3. Ensemble selon la revendication 1 ou 2, **caractérisé en ce que** chaque languette (13, 23) s'étend à une extrémité de la pièce (10, 20) et perpendiculairement par rapport à la surface la supportant.

4. Ensemble selon l'une quelconque des revendications 1 à 3, **caractérisé en ce que** le dispositif de maintien forme un capuchon (40, 60) délimitant un logement fermé, le capuchon étant propre à s'opposer à l'expansion des languettes lors de l'introduction de l'organe de blocage (50) entre les languettes (13, 23).

5. Ensemble selon la revendication 4, **caractérisé en ce que** le capuchon (60) et le logement ménagé à l'intérieur du capuchon (60) présentent la forme d'un cône tronqué, et **en ce que** les languettes possèdent chacune la forme d'un demi-cône de manière à venir se plaquer contre les parois du logement lors de l'introduction de l'organe de blocage (50).

6. Ensemble selon la revendication 4, **caractérisé en ce que** le capuchon (40) possède une face supérieure (42) délimitant l'orifice (43) communiquant avec le logement (41), et au moins trois autres faces latérales (44, 45, 46) s'étendant à partir de la face supérieure (42), deux des faces (45, 46) disposées en vis-à-vis possédant des surfaces inclinées contre lesquelles viennent se plaquer les languettes (13, 23) lors de l'introduction de l'organe de blocage.

7. Ensemble selon l'une quelconque des revendications 1 à 6, **caractérisé en ce que** ledit organe de blocage est une vis (50).

8. Ensemble selon l'une quelconque des revendications 1 à 7, **caractérisé en ce que** les première (10) et deuxième pièces (20) appartiennent à un équipement de véhicule automobile, par exemple à un pare-chocs.

9. Ensemble selon l'une quelconque des revendications 1 à 8, **caractérisé en ce qu'**il comprend en outre une troisième pièce (70) à fixer sur les première et deuxième pièces (10, 20), la troisième pièce (70) comportant un orifice traversant (71), les languettes (13, 23) des première et deuxième pièces (10, 20) étant destinées à s'étendre à travers ledit orifice, le dispositif de maintien (40, 60) s'appuyant sur la troisième pièce pour enserrer la troisième pièce entre au moins une de la première pièce (10) et de la deuxième pièce (20).

10. Procédé de montage d'un ensemble selon l'une quelconque des revendications 1 à 9, caractérisé en qu'il comprend les étapes suivantes :
- de rapprochement des première et deuxième pièces (10, 20) de manière à ce que les languettes (13, 23) s'étendent en vis-à-vis, de manière à ménager entre elles un espace (80) intermédiaire ;
- d'engagement du dispositif de maintien sur les languettes (13, 23) de manière à ce que les extrémités libres (13a, 23a) des languettes viennent en appui contre une face supérieure (42, 62) du dispositif de maintien ;
- d'engagement en force de l'organe de blocage (50) dans l'orifice (43, 63) du dispositif de maintien (40, 60) communiquant avec le logement (41), pour que l'organe de blocage (50) s'étende dans l'espace (80) séparant les languettes (13, 23) en écartant les languettes.

11. Procédé de montage selon la revendication 10, caractérisé en qu'il comprend, avant l'engagement du dispositif de maintien sur les languettes (13, 23), l'engagement des languettes (13, 23) dans un orifice traversant (71) ménagé dans une troisième pièce (70) destinée à être fixée sur la première pièce et sur la deuxième pièce.

## Patentansprüche

1. Ausrüstungsanordnung für ein Kraftfahrzeug, die ein erstes Teil (10) und ein zweites Teil (20), wobei jedes Teil (10, 20) mindestens eine Zunge (13, 23) aufweist, die von einer Fläche (12, 22) des Teils hervorspringend geformt ist, und
eine Haltevorrichtung (40, 60) umfasst, die mit einer Öffnung (43, 63) ausgerüstet ist, die mit einem Aufnahmeraum (41) in Verbindung steht, der im Inneren der Haltevorrichtung eingearbeitet ist, wobei die Zungen (13, 23) ausgebildet sind, in den Aufnahmeraum (41) der Haltevorrichtung eingeführt zu werden, **dadurch gekennzeichnet, dass** sie außerdem
ein Arretierelement (50) umfasst, das geeignet ist, die Zungen (13, 23) voneinander zu entfernen, um sie in dem Aufnahmeraum (41) zu expandieren, wobei dieses Arretierelement durch die Öffnung (43, 63) der Haltevorrichtung eingeführt wird, um sich zwischen die Zungen (13, 23) zu schieben.

2. Anordnung nach Anspruch 1, **dadurch gekennzeichnet, dass** die Zungen mit den sie stützenden Teilen (10, 20) durch Formen hergestellt sind.

3. Anordnung nach Anspruch 1 oder 2, **dadurch gekennzeichnet, dass** jede Zunge (13, 23) sich an einem Ende des Teils (10, 20) und senkrecht in Bezug auf die sie abstützende Fläche erstreckt.

4. Anordnung nach einem beliebigen der Ansprüche 1 bis 3, **dadurch gekennzeichnet, dass** die Haltevorrichtung eine Kappe (40, 60) bildet, die einen geschlossenen Aufnahmeraum begrenzt, wobei die Kappe geeignet ist, sich dem Expandieren der Zungen bei der Einführung des Arretierelements (50) zwischen die Zungen (13, 23) entgegenzustellen.

5. Anordnung nach Anspruch 4, **dadurch gekennzeichnet, dass** die Kappe (60) und der in dem Inneren der Kappe (60) angeordnete Aufnahmeraum die Form eines Kegelstumpfes aufweisen und dass die Zungen jeweils die Form eines Halbkegels besitzen, derart, dass sie gegen die Wände des Aufnahmeraums bei der Einführung des Arretierelements (50) drücken.

6. Anordnung nach Anspruch 4, **dadurch gekennzeichnet, dass** die Kappe (40) eine obere Fläche (42), die die mit dem Aufnahmeraum (41) in Verbindung stehende Öffnung (43) begrenzt, und mindestens drei andere Seitenflächen (44, 45, 46) besitzt, die sich von der oberen Fläche (42) erstrecken, wobei zwei der einander gegenüberliegend angeordneten Flächen (45, 46) geneigte Oberflächen besitzen, gegen die sich die Zungen (13, 23) bei dem Einführen des Arretierelements pressen.

7. Anordnung nach einem beliebigen der Ansprüche 1 bis 6, **dadurch gekennzeichnet, dass** das Arretierelement eine Schraube (50) ist.

8. Anordnung nach einem beliebigen der Ansprüche 1 bis 7, **dadurch gekennzeichnet, dass** das erste (10) und zweite (20) Teil zu einer Kraftfahrzeugausrüstung, zum Beispiel zu einem Stoßfänger gehören.

9. Anordnung nach einem beliebigen der Ansprüche 1 bis 8, **dadurch gekennzeichnet, dass** sie außerdem ein drittes Teil (70) umfasst, das an dem ersten (10) und dem zweiten (20) Teil zu befestigen ist, wobei das dritte Teil (70) eine Durchgangsöffnung (71) aufweist, und die Zungen (13, 23) des ersten (10) und zweiten (20) Teils dazu dienen, sich durch diese Öffnung zu erstrecken, wobei die Haltevorrichtung (40, 60) sich an dem dritten Teil abstützt, um das dritte Teil zwischen mindestens einem des ersten (10) oder zweiten (20) Teils einzuspannen.

10. Verfahren zum Montieren einer Anordnung nach einem beliebigen der Ansprüche 1 bis 9, **dadurch gekennzeichnet, dass** es die folgenden Schritte umfasst:
- Annähern des ersten (10) und des zweiten (20) Teils derart, dass die Zungen (13, 23) sich einander gegenüberstehen, um zwischen ihnen einen Zwischenraum (80) herzustellen;
- Aufsetzen der Haltevorrichtung auf die Zungen (13, 23) derart, dass die freien Enden (13a, 23a) der Zungen gegen eine obere Fläche (42, 62) der Haltevorrichtung in Abstützung kommen;
- Einführen des Arretierelements (50) mit Kraft in die Öffnung (43, 63) der Haltevorrichtung (40, 60), die mit dem Aufnahmeraum (41) in Verbindung steht, damit das Arretierelement (50) sich in den die Zungen (13, 23) trennenden Raum hinein erstreckt, wodurch die Zungen voneinander entfernt werden.

11. Verfahren zum Montieren nach Anspruch 10, **dadurch gekennzeichnet, dass** es vor dem Aufsetzen der Haltevorrichtung auf die Zungen (13, 23) das Einführen der Zungen (13, 23) in eine Durchgangsöffnung (71) umfasst, die in einem dritten Teil (70) vorgesehen ist, das dazu dient, an dem ersten Teil und dem zweiten Teil festgelegt zu werden.

## Claims

1. Assembly of automotive vehicle components comprising a first part (10) and a second part (20), each part (10, 20) comprising at least one tongue (13, 23) which is formed projecting on one face (12, 22) of the part and comprising a retaining device (40, 60) which is provided with an orifice (43, 63) which communicates with a housing (41) provided in the inside of the retaining device, said tongues (13, 23) being intended to be inserted in the housing (41) of the retaining device,
**characterised in that** it comprises in addition a locking member (50) which is suitable for spreading the tongues (13, 23) in order to expand them in said housing (41), this locking member being introduced through the orifice (43, 63) of the retaining device in order to be inserted between the tongues (13, 23).

2. Assembly according to claim 1, **characterised in that** the tongues are produced by moulding with the parts (10, 20) which support them.

3. Assembly according to claim 1 or 2, **characterised in that** each tongue (13, 23) extends at one end of the part (10, 20) and perpendicularly relative to the surface which supports it.

4. Assembly according to any of the claims 1 to 3, **characterised in that** the retaining device forms a hood (40, 60) which delimits a closed housing, the hood being suitable for opposing the expansion of the tongues during introduction of the locking member (50) between the tongues (13, 23).

5. Assembly according to claim 4, **characterised in that** the hood (60) and the housing provided in the inside of the hood (60) have the shape of a truncated cone, and **in that** the tongues each have the shape of a semi-cone so that they become pressed against the walls of the housing during introduction of the locking member (50).

6. Assembly according to claim 4, **characterised in that** the hood (40) has an upper face (42) delimiting the orifice (43) which communicates with the housing (41), and at least three other lateral faces (44, 45, 46) which extend from the upper face (42), two of the oppositely disposed faces (45, 46) having inclined surfaces against which the tongues (13, 23) become pressed during introduction of the locking member.

7. Assembly according to any of the claims 1 to 6, **characterised in that** said locking member is a screw (50).

8. Assembly according to any of the claims 1 to 7, **characterised in that** the first (10) and second parts (20) belong to automotive vehicle components, for example a bumper.

9. Assembly according to any of the claims 1 to 8, **characterised in that** it comprises in addition a third part (70) to be fixed on the first and second parts (10, 20), the third part (70) including a penetrating orifice (71), the tongues (13, 23) of the first and second parts (10, 20) being intended to extend through said orifice, the retaining device (40, 60) abutting on the third part in order to encircle the third part tightly between at least one of the first part (10) and of the second part (20).

10. Method for assembling an assembly according to any of the claims 1 to 9, **characterised in that** it comprises the following steps:
- of bringing together the first and second parts (10, 20) so that the tongues (13, 23) extend opposite each other, so as to provide an intermediate space (80) between them;
- of engaging the retaining device on the tongues (13, 23) so that the free ends (13a, 23a) of the tongues come to abut against an upper face (42, 62) of the retaining device;
- of force-fitting the locking member (50) in the orifice (43, 63) of the retaining device (40, 60) which communicates with the housing (41) in order that the locking member (50) extends in the space (80) which separates the tongues (13, 23) by spreading the tongues.

11. Assembly method according to claim 10, **characterised in that** it comprises, before engagement of the retaining device on the tongues (13, 23), engagement of the tongues (13, 23) in a penetrating orifice (71) which is provided in a third part (70) which is intended to be fixed on the first part and on the second part.
